# EUROPÄISCHE PATENTSCHRIFT

(11) **EP 0 929 925 B1**
(45) Veröffentlichungstag und Bekanntmachung des Hinweises auf die Patenterteilung: **31.05.2006**
(21) Anmeldenummer: 98942497.3
(22) Anmeldetag: 07.07.1998
(51) Int. Cl.: H02H 7/08

(54) **SCHALTUNGSANORDNUNG ZUM ANSTEUERN EINES MOTORS MIT EINER ÜBERLASTERKENNUNGSEINRICHTUNG**
CIRCUIT FOR CONTROLLING A MOTOR WITH A DEVICE FOR RECOGNISING AN OVERLOAD
CIRCUIT POUR COMMANDER UN MOTEUR AVEC UN DISPOSITIF DE RECONNAISSANCE DE SURCHARGE

(30) Priorität: 25.07.1997 DE 19732095
(43) Veröffentlichungstag der Anmeldung: 21.07.1999
(73) Patentinhaber: ROBERT BOSCH GMBH, 70442 Stuttgart (DE)
(72) Erfinder: PREIS, Karl-Heinrich, D-77830 Buehlertal (DE)
(86) Internationale Anmeldenummer: PCT/DE1998/001868
(87) Internationale Veröffentlichungsnummer: WO 1999/005762

(56) Entgegenhaltungen:
- EP-A- 0 536 488
- WO-A-92/20891
- DE-A- 3 929 236
- DE-C- 19 502 016
- PATENT ABSTRACTS OF JAPAN vol. 015, no. 014 (E-1022), 11. Januar 1991 & JP 02 262897 A (MATSUSHITA ELECTRIC IND CO LTD), 25. Oktober 1990

## Beschreibung

Die Erfindung bezieht sich auf eine Schaltungsanordnung zum getakteten Ansteuern eines Motors mit einer Überlasterkennungseinrichtung gemäß dem Oberbegriff des Anspruchs 1.

Eine Schaltungsanordnung dieser Art ist in der DE 39 29 236 A1 angegeben. Bei dieser bekannten Schaltungsanordnung wird auf einer zu überwachenden Leitung eines Verbrauchers, beispielsweise eines Motors, mittels einer Ansprechinduktivität eine Stromanstiegsgeschwindigkeit überwacht, die über eine Messinduktivität abgegriffen und über weitere Schaltungskomponenten in eine an den Eingang eines Komparators gelegte Spannung umgewandelt wird, um eine Ausgangsspannung für eine Auswertung zu erhalten.

Eine weitere bekannte Schaltungsanordnung sieht einen Shunt zum Erfassen einer Motorüberlastung vor, wie sie z.B. bei einem Motorkühlungsmotor bzw. einem Ventilatormotor bei einer Wasserdurchfahrt auftreten kann. Der durch die Überlastung erhöhte Motorstrom erzeugt an dem Shunt einen erhöhten Spannungsabfall, der zur Überlasterkennung erfasst wird. Der Shunt selbst erzeugt eine nicht unwesentliche Verlustleistung und ist auch hinsichtlich der Kosten nicht unerheblich.

Die EP-A 0 536 488 zeigt eine Ansteuerschaltung für einen Gleichstrommotor mit einer Überlastungsschaltung. Hierbei wird eine Spannung an einem Kondensator abgegriffen, der zu einem elektronischen Motor-Steuerschalter über eine Diode parallel geschaltet ist. Es ist angegeben, die Kapazität des Kondensators hoch auszulegen und so zu bemessen, dass im Fehlerfalle, z.B. bei Unterbrechung eines Freilaufpfades die vorgegebene Überlastspannung erst nach zwei oder mehr Schaltvorgängen des impulsgesteuerten Schalters erreicht wird.

In der WO 92/20891 A ist bei einer Ansteuerschaltung für einen Motor ein Strom-Erfassungspfad vorgeschlagen, der durch einen aus dem Motor und dem Pfad dargestellten Spannungsteiler abgebildet wird.

Der Erfindung liegt die Aufgabe zugrunde, eine Schaltungsanordnung der eingangs erwähnten Art bereitzustellen, die bei zuverlässiger Erfassung einer Motorüberlastung vorteilhaft hinsichtlich des Energieverbrauchs und der Kosten ist.

Diese Aufgabe wird mit den Merkmalen des Anspruchs 1 gelöst. Hiernach ist also vorgesehen, dass das abgegriffene Signal eine Spannungsspitze ist und dass die Schaltungsinduktivität durch eine Leitungsinduktivität in einer Verbindungsleitung eines zu dem Motor parallel geschalteten Elektrolytkondensators gebildet ist. Durch die Erfassung der an der Schaltungsinduktivität entstehenden Spannungsspitze ergibt sich nicht nur eine sichere Signalerkennung, sondern das Signal wird auch mit minimaler Verlustleistung erzeugt. Die Spannungsspitze ist abhängig von dem Motorstrom, so dass die Überlastung durch den Vergleich mit der vorgegebenen Schwellenspannung sicher erkennbar ist.

Eine günstige Abgriffmöglichkeit für die Spannungsspitze ergibt sich dadurch, dass die Schaltungsinduktivität durch eine Leitungsinduktivität in einer Verbindungsleitung eines zu dem Motor parallel geschalteten Elektrolytkondensators gebildet ist. Die Schaltungsinduktivität kann an einer geeigneten Leitung insbesondere auf einer Platine abgegriffen werden.

Die Signalerfassung ist mit einfachen Maßnahmen dadurch möglich, dass die Schaltungsinduktivität an der Verbindungsleitung zum Minusanschluss des Elektrolytkondensators gebildet ist und dass die Signalerfassungsstufe zum Auskoppeln einer positiven Spannungsspitze eine mit ihrer Anode an den Minusanschluß des Elektrolytkondensators angeschlossene Diode aufweist, deren Kathode über einen Kondensator und einen diesem parallel geschalteten Widerstand an Masse geführt ist.

Eine einfache, zuverlässige Erfassung der Motorüberlastung wird dadurch begünstigt, daß die Spannungsspitze einem Anschluß einer Komparatorstufe zugeführt wird, an dessen anderem Anschluß die Schwellenspannung gebildet ist.

Für die kostengünstige Herstellung hinsichtlich der Bauelemente und der Fertigung ist die Maßnahme vorteilhaft, daß die Signalerfassungsstufe zumindest zum Teil in SMD-Technik ausgeführt ist.

Die Erfindung wird nachfolgend anhand eines Ausführungsbeispiels unter Bezugnahme auf die Zeichnungen näher erläutert. Es zeigen:
- Fig. 1: eine schematische Darstellung einer Schaltungsanordnung für eine Motoransteuerung,
- Fig. 2: einen Ausschnitt aus der in Fig. 1 gezeigten Schaltungsanordnung wobei eine Signalerfassungsstufe dargestellt ist und
- Fig. 3: Signalverläufe der in den Fig. 1 und 2 dargestellten Schaltungsanordnung.

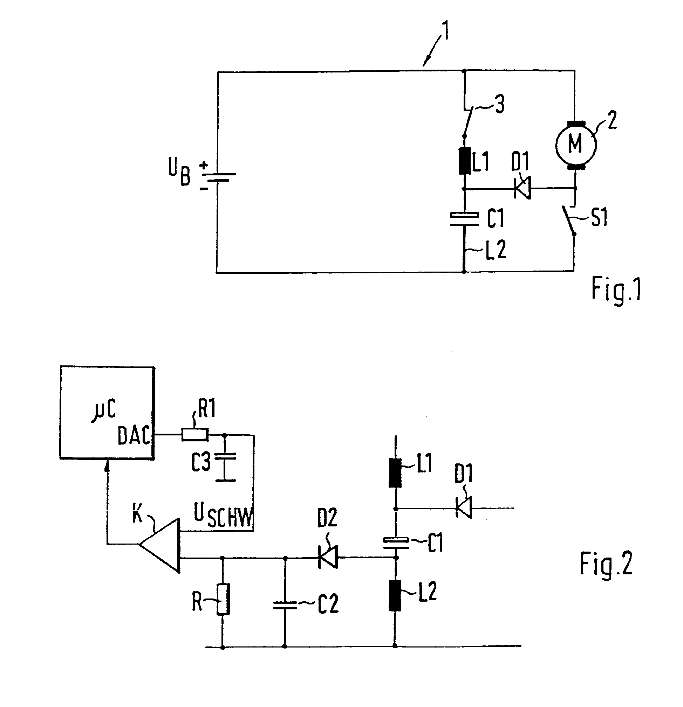

Die Fig. 1 zeigt eine Schaltungsanordnung 1 mit einem Motor 2, der über einen elektronischen Schalter S1, vorzugsweise in Form eines Leistungs-MOS-Fets, getaktet angesteuert wird. Parallel zu dem Motor 2 liegt ein Schaltungszweig mit einem Elektrolytkondensator C1 sowie einer Entstör-Drossel L1 und einem Verpolschutz mit einem weiteren elektronischen Schalter 3. Zwischen dem Minusanschluß des Motors 2 und dem Plusanschluß des Elektrolytkondensators C1 ist eine Freilaufdiode D1 mit ihrer Anode an dem Motoranschluß und ihrer Kathode an dem Plusanschluß des Elektrolytkondensators C1 angeschlossen. Zwischen dem Minusanschluß des Elektrolytkondensators C1 und dem Masseanschluß liegt eine Leitungsinduktivität L2. Die Schaltungsanordnung 1 wird von einer Batteriespannung U_{B} versorgt.

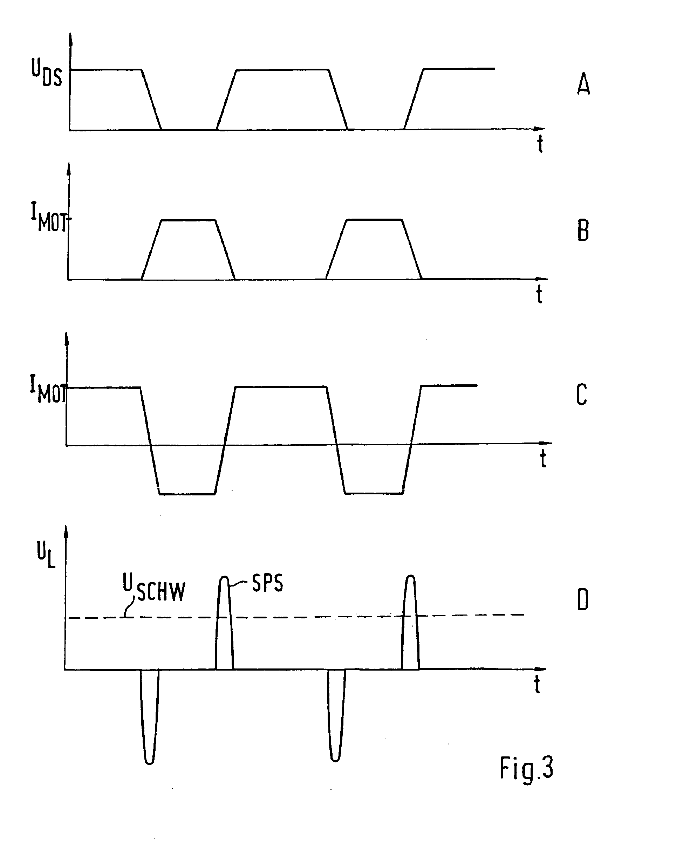

An der Leitungsinduktivität L2 ist eine Signalerkennungsstufe einer Überlasterkennungseinrichtung angeschlossen, wie z.B. in Fig. 2 dargestellt. Die Signalerkennungsstufe weist eine Diode D2 auf, die mit ihrer Anode an dem Minusanschluß des Elektrolytkondensators C1 angeschlossen ist und mit ihrer Kathode an einer Parallelschaltung aus einem Kondensator C2 und einem Entlade-Widerstand R liegt, deren anderen Anschlüsse nach Masse geführt sind. Mit der Signalerkennungsschaltung werden an der Schaltungsinduktivität in Form der Leitungsinduktivität L2 beim Takten des Motors 2 entstehende positive Spannungsspitzen SPS gemäß Fig. 3 ausgekoppelt und mit einer an die Signalerkennungsstufe angeschlossenen Komparatorstufe K erfaßt, die die auftretenden Spannungsspitzen SPS mit einer Schwellenspannung U_{SCHW} vergleicht. Die Spannungsspitzen SPS werden hinsichtlich der Erkennung einer Motorüberlastung ausgewertet.

Verschiedene andere Signalerkennungsstufen sind möglich, wobei auch eine Temperaturkompensation für eine Diode vorgesehen sein kann.

Die Signalerkennung erfolgt mit einem Mikrorechner *µ*C, der über einen Digital/Analog-Wandler DAC den zulässigen Maximalstrom vorgibt, bzw. die Schwellenspannung U_{SCHW}, so daß eine Überlastung auch bei kleinen Strömen (Drehzahlen) erkannt wird. Außerdem kann eine Motor-Anlaufstromspitze ausgeblendet werden. Zwischen dem Digital/Analog-Ausgang des Mikrorechners *µ*C und dem einen Eingang des Komparators K liegt ein Schaltglied mit einem Widerstand R1 und einem gegen Masse geschalteten Kondensator C3. Auch anstelle dieses Schaltungsteils sind andere Auswerteschaltungen möglich.

In Fig. 3 sind in einem Diagramm verschiedene Signalverläufe der Schaltungsanordnung 1 dargestellt. In dem Figurenteil A ist die Drain-Source-Spannung U_{DS} des Leistungs-MOS-Fets S1 über der Zeit t wiedergegeben. Figurenteil B zeigt den Motorstrom in dem Zweig des Leistungs-Mos-Fets S1, während Figurenteil C den Motorstrom in dem zu dem Elektrolytkondensator C1 führenden Zweig der Schaltungsanordnung 1 zeigt. In dem Figurenteil D sind die bereits genannten Spannungsspitzen SPS der an der Leitungsinduktivität L2 entstehenden Spannung U_{L} dargestellt. Wechselt die Drain-Source-Spannung U_{DS} von dem H-Pegel zum L-Pegel, so ehtsteht durch den in dem Schaltungszweig zu dem Elektrolytkondensator C1 fließenden Motorstrom I_{MOT} eine negative Spannungsspitze SPS an der Leitungsinduktivität L2, während bei dem Wechsel der Drain-Source-Spannung U_{DS} von dem L-Pegel zu dem H-Pegel sich infolge des zu dem Elektrolytkondensator C1 fließenden Motorstroms I_{MOT} eine positive Spannungsspitze SPS ergibt. Bei Motorüberlastung übersteigen die Spannungsspitzen SPS die Schwellenspannung U_{SCHW} beträchtlich, so daß diese Spannungsspitzen SPS eine sichere Überlasterkennung gewährleisten.

Die Schaltzeiten zwischen dem H-Pegel und dem L-Pegel der Drain-Source-Spannung sowie der Motorströme I_{MOT} sind im wesentlichen konstant. Temperatureinflüsse werden bei der Dimensionierung berücksichtigt. Bei einem Ventilatormotor hat sich beispielsweise eine Signalhöhe der Spannungsspitzen SPS von 1 V/20A ergeben. Ist der Motor beispielsweise bei Wasserdurchfahrt blockiert, fließt in der bestromten Zeit ein hoher Mo-torstrom I_{MOT}, obwohl der mittlere Zuleitungsstrom von der Batterie klein ist. Es kann damit das Blockieren bereits erkannt werden, bevor der maximal zulässige Betriebsstrom überschritten ist.

Die Signalerkennungsstufe kann kostengünstig ausgeführt werden, indem insbesondere die Diode D2 und der Kondensator C2 in SMD-Technik ausgeführt werden. Durch die Erfassung der Spannungsspitzen SPS an der Leitungsinduktivität L2 werden durch die Überlastungserkennungseinrichtung keine zusätzlichen Verluste der Elektronik verursacht.

## Patentansprüche

1. Schaltungsanordnung zum getakteten Ansteuern eines Motors mit einer Überlasterkennungseinrichtung, die eine Signalerfassungsstufe (R, D2, C2) aufweist, mittels der die Überlastung des Motors (2) durch Abgriff eines an einer Schaltungsinduktivität (12) entstehenden Signals erfassbar ist,
**dadurch gekennzeichnet,**
**dass** das abgegriffene Signal eine Spannungsspitze (SPS) ist und
**dass** die Schaltungsinduktivität (L2) durch eine Leitungsinduktivität in einer Verbindungsleitung eines zu dem Motor (2) parallel geschalteten Elektrolytkondensators (C1) gebildet ist.

2. Schaltungsanordnung nach Anspruch 1,
**dadurch gekennzeichnet,**
**dass** die Schaltungsinduktivität (L2) an der Verbindungsleitung zum Minusanschluss des Elektrolytkondensators (C2) gebildet ist.

3. Schaltungsanordnung nach einem der vorhergehenden Ansprüche,
**dadurch gekennzeichnet,**
**dass** die Spannungsspitze (SPS) einem Anschluss einer Komparatorstufe (K) zugeführt wird, an dessen anderem Anschluss eine Schwellenspannung (U_{SCHW}) gebildet ist.

4. Schaltungsanordnung nach einem der vorhergehenden Ansprüche,
**dadurch gekennzeichnet,**
**dass** die Signalerfassungsstufe (R, D2, C2) zum Auskoppeln einer positiven Spannungsspitze (SPS) eine mit ihrer Anode an den Minusanschluss des Elektrolytkondensators (c1) angeschlossene Diode (D2) aufweist, deren Kathode über einen Kondensator (C2) und einen diesem parallel geschalteten Widerstand (R) an Masse geführt ist.

5. Schaltungsanordnung nach einem der vorhergehenden Ansprüche,
**dadurch gekennzeichnet,**
**dass** die Signalerfassungsstufe (R, D2, C2) zumindest zum Teil in SMD-Technik ausgeführt ist.

6. Schaltungsanordnung nach einem der Ansprüche 3 bis 5,
**dadurch gekennzeichnet,**
**dass** die Überlastungseinrichtung einen Mikrorechner (µC) aufweist, in dem die Spannungsspitze (SPS) auswertbar ist und an dessen einem Ausgang über einen Digital / Analog-Wandier (DAG) ein zulässiger Maximalstrom für die Komparatorstufe (K) vorgebbar ist.

## Claims

1. Circuit arrangement for clocked driving of a motor with an overload identification device having a signal detection stage (R, D2, C2), by means of which the overloading of the motor (2) can be detected by tapping off a signal arising at a circuit inductance (L2),
**characterized**
**in that** the tapped-off signal is a voltage spike (SPS) and
**in that** the circuit inductance (L2) is formed by a line inductance in a connecting line of an electrolytic capacitor (C1) connected in parallel with the motor (2).

2. Circuit arrangement according to Claim 1,
**characterized**
**in that** the circuit inductance (L2) is formed on the connecting line to the negative terminal of the electrolytic capacitor (C2).

3. Circuit arrangement according to one of the preceding claims,
**characterized**
**in that** the voltage spike (SPS) is fed to one terminal of a comparator stage (K), at the other terminal of which a threshold voltage (U_{THR}) is formed.

4. Circuit arrangement according to one of the preceding claims,
**characterized**
**in that** the signal detection stage (R, D2, C2), for coupling out a positive voltage spike (SPS), has a diode (D2) connected by its anode to the negative terminal of the electrolytic capacitor (C1), the cathode of said diode being earthed via a capacitor (C2) and a resistor (R) connected in parallel with the latter.

5. Circuit arrangement according to one of the preceding claims,
**characterized in that**
the signal detection stage (R, D2, C2) is embodied at least in part using SMD technology.

6. Circuit arrangement according to one of Claims 3 to 5,
**characterized**
**in that** the overload device has a microcomputer (µC), in which the voltage spike (SPS) can be evaluated and at one output of which a permissible maximum current for the comparator stage (K) can be prescribed via a digital/analogue converter (DAC).

## Revendications

1. Circuit pour commander de manière cadencée un moteur comportant un dispositif de reconnaissance de surcharge, qui présente un étage de reconnaissance de signal (R, D2, C2) permettant de reconnaître la surcharge du moteur (2) par captage d'un signal apparaissant sur une inductance de circuit (L2),
**caractérisé en ce que**
le signal capté consiste en un pic de tension (SPS), et
l'inductance de circuit (L2) est formée par une inductance de ligne dans une ligne de connexion d'un condensateur électrolytique (C1) monté en parallèle avec le moteur (2).

2. Circuit selon la revendication 1,
**caractérisé en ce que**
l'inductance de circuit (L2) est formée au niveau d'une ligne de connexion avec la borne négative du condensateur électrolytique (C2).

3. Circuit selon l'une des revendications précédentes,
**caractérisé en ce que**
le pic de tension (SPS) est fourni à une borne d'un étage de comparateur (K), une tension seuil (U_{SCHW}) se formant au niveau de son autre borne.

4. Circuit selon l'une des revendications précédentes,
**caractérisé en ce que**
l'étage de reconnaissance de signal (R, D2, C2) permettant de découpler un pic de tension positif (SPS) présente une diode (D2) raccordée avec son anode à une borne négative du condensateur électrolytique (c1), la cathode de la diode étant mise à la masse moyennant un condensateur (C2) et une résistance (R) montée en parallèle avec ce dernier.

5. Circuit selon l'une des revendications précédentes,
**caractérisé en ce que**
l'étage de reconnaissance de signal (R, D2, C2) est exécuté au moins en partie suivant la technique SMD.

6. Circuit selon l'une des revendications 3 à 5,
**caractérisé en ce que**
le dispositif de surcharge présente un microordinateur (µC) permettant d'évaluer le pic de tension (SPS), et un courant maximal admissible destiné à l'étage de comparateur (K) est prédéterminable à la sortie du microordinateur grâce à un convertisseur numérique/analogique (DAG).
